Europäisches Patentamt

European Patent Office

Office européen des brevets

(11) Publication number: **0 478 167 A2**

## EUROPEAN PATENT APPLICATION

(21) Application number: **91308162.6**

(22) Date of filing: **06.09.91**

(51) Int. Cl.⁵: **B29C 39/02**, C09K 3/10, //B29K7:00

(30) Priority: **28.09.90 GB 9021166**

(43) Date of publication of application: **01.04.92 Bulletin 92/14**

(84) Designated Contracting States: **AT BE CH DE DK ES FR GB GR IT LI LU NL SE**

(71) Applicant: **W.R. Grace & Co.-Conn. 1114 Avenue of the Americas New York New York 10036(US)**

(72) Inventor: **Patel, Girish Somabhai 3 Elmfield Way Sanderstead, South Croydon CR2 0EG(GB)** Inventor: **Luxman de Silva, Gregory Paul Hermit 9 Alamein Court St. Neots, Cambridgeshire PE19 3JL(GB)**

(74) Representative: **Lawrence, Peter Robin Broughton et al GILL JENNINGS & EVERY 53-64 Chancery Lane London WC2A 1HN(GB)**

(54) **Processes and compositions for forming container closures.**

(57) Gaskets 0.5 to 4mm thick in caps for bottles or jars are formed by providing an aqueous, filled, rubber dispersion that contains a gellant that will gel the composition upon heating, and this composition is lined into the cap and heated at a temperature of 140 to 220°C for up to 10 minutes. Gelling occurs at the start of the heating and the process provides a uniform gasket that adheres to the cap.

EP 0 478 167 A2

It is standard practice to provide a gasket in a container cap in order to improve the seal between the cap and the container that is to be closed by the cap. Various ways of providing the gasket are known, and a common way involves lining a liquid gasketing composition into the cap and then solidifying and curing the gasketing composition to form the desired gasket.

A wide variety of liquid gasketing compositions are known for this purpose and include organic solutions, aqueous dispersions, and plastisols.

Aqueous dispersions, and in particular dispersions based on rubber latices, are commonly used in can sealing compositions, where the gasket is thin (e.g., up to 0.3mm in the thickest part under the curl). These very thin layers dry relatively easily.

It is also known to use aqueous dispersions for making thick gaskets. In particular drum covers are provided with thick gaskets typically 5mm or more in thickness using aqueous dispersions. Evaporating the water from these thicker deposits is much more difficult. If the water is evaporated too fast from a composition of conventional viscosity, it destroys the homogeneous nature of the gasket. Thus, voids are present within the final gasket and it may also have been lifted off parts of the cap substrate with the result that it is not uniformly adhered to the substrate.

Accordingly, it is conventional practice that whenever thick gaskets are to be formed by lining an aqueous composition, then the drying and curing of the composition must be conducted relatively slowly. For instance, when some of the early aqueous dispersion gasketing compositions were coated at around 2mm and dried, drying times of 30 minutes or more were required typically at a temperature of 90°C. If any attempt was made to raise the temperature and shorten the drying time there was blistering and cracking of the gasket. The drying of modern compositions for drum covers is conducted a little faster, typically 10 to 30 minutes at 110 to 140°C, but this is still very slow relative to what is required for another, widely used, class of liquid compositions, namely plastisols.

For many years, a large proportion of relatively thick gaskets (e.g., 0.5 to 4mm thick), for closures such as crowns, RO closures and lug caps, have been made from PVC plastisols. The fluid plastisol is lined into the cap and the cap is then heated to a high temperature for a very short time, typically 180 to 210°C for 1 to 2 minutes. The heating is conducted by passage through an appropriate oven.

There is current concern about the use of PVC plastisols as gaskets for, especially, edible materials and so it would be desirable to be able to use an alternative liquid composition. It is essential that any such composition should be capable of being converted to its solidified and cured state very fast because industrial users would not want to have to slow down the overall lining process, and possibly provide much larger ovens, to allow for much slower drying periods. As a result, it would not be acceptable to be required to use the drying conditions that are currently used for aqueous dispersions in drum covers, namely up to 30 minutes at temperatures of up to 140°C. Conventional considerations associated with the drying of aqueous dispersions dictate that mere elevation of the drying temperature would lead inevitably to blistering and voids in the gasket.

There is therefore a need for being able to make relatively thick (e.g., 0.5mm to 4mm) gaskets by lining a liquid (preferably aqueous) composition on to a cap and then heating it for only a very short time, and which gives a uniform and strongly adherent gasket and which does not involve the use of PVC or other environmentally undesirable chemicals.

According to the invention, a gasket 0.5 to 4mm thick is formed in a cap for a bottle or jar by lining into the cap a liquid gasketing composition and heating the cap at a temperature and for a time sufficient to solidy and cure the gasketing composition, and in this process the heating is conducted at a temperature of about 140°C to about 220°C for a period of about 1/4 to about 10 minutes and the liquid gasketing composition is a filled, aqueous, rubber dispersion that adheres to the cap during and after the heating and that is fluid while being lined but that contains a gellant that causes the gasketing composition, before there is substantial evaporation of water during the heating, to gel in the form of a substantially uniform composition that substantially retains its adhesion to the cap and its uniformity during the heating.

Thus, for the first time, we have provided a process for forming gaskets in crowns, RO closures, lug caps and similar caps that is very fast to operate but that does not involve the use of a PVC plastisol, and that gives gaskets having excellent sealing properties.

The cap is typically a closure for a bottle or jar typically having diameters from 20 to 150, generally around 25 to 100, mm. The thickness of the gasket is preferably at least 1mm typically 1 to 3mm, often around 2mm.

The temperature and time are inter-related. The temperature is generally above about 150°C. Although very high temperatures can be used, it is generally better to operate at slightly lower temperatures, for instance below about 200 and usually below about 180°C. Best results are generally obtained with a temperature of around about 160°C. The temperature is preferably selected such that the time for drying is below 5, and usually below 3, minutes but if the drying is too fast there can be a tendency to blistering and it is satisfactory for drying to take at least I minute. A drying duration of around 2 minutes is usually preferred. The drying can conveniently be conducted by passing the lined cap through an oven, or beneath heaters, that generate the desired temperature for the desired duration. Usually the heating is conducted substantially immediately after lining the fluid composition, but if desired there can be a residence time, that is usually short, between lining and heating. For instance the heating is generally initiated not more than 5 minutes, and generally not more than I minute, after lining.

The aqueous dispersion is preferably made by combining a rubber latex with the other components of the dispersion.

The rubber of the dispersion consists of one or more rubbery polymers. Preferably the rubbery component comprises natural rubber latex and best results are generally achieved when at least 50% of the rubbery polymer is natural rubber. Blends of natural rubber latex and synthetic rubber latex may be used. Examples of synthetic rubber latices include butyl rubber, nitrile rubber, polychloroprene, polyisoprene, butadiene-acrylonitrilestyrene copolymer, polybutadiene, polyvinyl acetate, vinyl acetate copolymers, acrylic acid copolymers, methacrylic acid copolymers, acrylic ester copolymers, styrene-acrylic ester copolymers, styrene-butadiene black copolymers and styrene-butadiene rubbers. Any of these may be carboxylated where appropriate.

It is preferred that the rubbery polymer should include a carboxylated rubber, for example carboxylated styrene butadiene rubber. Typically the monomers from which the carboxylated rubber is made include I to 5% of ethylenically unsaturated carboxylic acid such as fumaric acid or methacrylic acid. The amount of carboxylated rubber is generally less than 50% of the total amount of rubber but is normally above 5% or I0%. Suitable amounts are typically around I5 to 35%, most preferably about 25% to 30%.

Best results in the invention are obtained when the rubber is provided as a blend of a major amount of a natural rubber latex and a minor amount of a carboxylated styrene butadiene rubber, for instance in a weight ratio of dry rubber of 5:I to 2:I, often around 3:I.

The composition contains filler. This is typically present in an amount of above 5O phr (parts by weight per hundred parts by weight rubber) and usually at least 8O phr. Although the amount can be as high as, for instance, I8O phr it is generally below I5O, most preferably below I3O phr. The filler can include a minor amount of a pigmentary filler such as titanium dioxide but the majority, for instance at least 8O% and usually at least 9O%, of the filler can be selected from conventional fillers for rubber-based sealing compositions such as kaolin, whiting, barytes, aluminium trihydrate or talc.

The composition will normally contain one or more emulsifiers and dispersion stabilisers. For instance the initial rubber latex will generally contain emulsifier (or soap) and additional stabiliser may be added to promote the stability of the final composition. The emulsifiers and stabilisers generally comprise anionic emulsifiers and stabilisers. The compositions generally contain ammonia (or a volatile amine) in conventional manner, and so the anionic stabilisers and emulsifiers can be introduced into the composition as ammonium salts or may form ammonium salts in the composition.

The preferred emulsifiers are fatty acid salts or esters. Ammonium oleate is preferred. Alternatives are ammonium salt of any fatty acid which is liquid at room temperature, particularly C16-18 fatty acids, or esters or these acids such as methyl or butyl esters.

Stabiliser that may be used can include disproportionated rosin acid.

An important feature of the invention is that the fluid gasketing composition includes a gellant that causes the gasketing composition to gel before there is substantial evaporation of the water, and to form an adherent, substantially uniform, composition. In conventional compositions, the viscosity will increase gradually as the water content decreases, but in the invention the gelling occurs while the water content is still sufficiently high that, in the absence of the gelling mechanism, the composition would still be very fluid. Thus gelling does not require significant evaporation of water to occur but instead is induced by a mechanism that is substantially independent of the water content. Thus in the invention the gasketing composition is formulated such that it can be lined as a fluid but it then becomes gel that adheres to the cap before significant evaporation of water occurs. Thus it is possible to avoid the problems, such as blistering, that have traditionally occurred when evaporating significant amounts of water from a fluid composition.

The composition should be stable against gelling before lining. Gelling can be caused to occur during or immediately after lining, for instance as a result of exposure of the composition to the surrounding atmosphere, but generally gelling is initiated by heating during or, more usually, after lining. Thus the composition can be stored and lined at ambient temperatures and the lined composition may then be heated. Initially, the main effect of this heating will be to cause gelling but thereafter the heating can result in evaporation of water from the gelled composition.

Gellants for latices are known and in the invention any gellant can be used that is inert during storage but that can cause gelling at the appropriate time, for instance as a result of being decomposed by heating of the composition to cause gelling after lining. Preferably therefore the gellant comprises a compound that decomposes or volatilises on heating so as to cause gelation. As mentioned, the compositions generally contain ammonia and the decomposition frequently involves the liberation of ammonia from an ammonium salt or complex.

The gellant can decompose to liberate an acid that will reduce the pH of the composition sufficient to cause gelling. For instance the gellant can be the ammonium salt of a weak acid such as ammonium acetate.

Preferably the gellant is a material that is decomposed by heating to liberate polyvalent metal ions that will react with the ammonium soap or other anionic emulsifier or stabiliser in the composition so as to cause gellation of the composition, probably as a result of precipitation of the soap.

In particular, it is preferred to include an ammonium complex of zinc or other suitable polyvalent metal and which decomposes on heating to liberate the polyvalent metal ion and cause gellation. For instance a compound such as zinc oxide, magnesium oxide or zinc sulphate is included in the composition together with ammonia or other volatile amine (which is normally present in the rubber latex to adjust pH) and these compounds interact to form a quaternary ammonium or amine complex of zinc or other multivalent ion. On heating, the ammonia or other volatile amine is driven off and the zinc or other multivalent ion interacts with anionic soap or emulsifier in the dispersion to cause gellation.

The amount of gellant will depend upon the material being used and, in particular, on the soap or other anionic emulsifier. Generally the ratio of soap to gellant is in the range 15:1 to 3:1, usually 9:1 to 5:1. When the gellant is an ammonium complex of polyvalent metal, the amount of gellant is expressed as the amount of polyvalent metal oxide or salt that is added to the composition to form the complex.

The gel that is formed must adhere to the cap sufficiently strongly to resist being blistered off the cap during drying, and the dried composition must adhere to the cap.

The surface of the cap to which the composition is to bond often carries a coating of lacquer, in which event the gasketing composition, the intermediate gel and the final dried gasket must have satisfactory adhesion to this lacquer coating, rather than to the substrate that has been coated. The desired adhesion is best obtained by including a carboxylated rubber as part or all of the rubber composition since this can result in significantly improved adhesion of the fluid, gelled and dried compositions to most lacquer and other surfaces.

The rubber in the gasket is preferably cross linked so as to improve the mechanical properties of the gasket, and the cross linking can also contribute to the provision of a suitable gel. For instance it may help resist blistering and rupture. Crosslinking is best achieved by vulcanisation using a vulcanising agent that typically is activated by the heating. Typical vulcanising agents include sulphur, sulphur donors such as di-pentamethylene thiuram tetrasulphide and accelerators such as zinc oxide and zinc di-alkyl di-thiocarbamates.

Cross linking of the carboxylated groups in the rubber, for instance by zinc or other multivalent metal ions, can also help provide suitable properties to the gel and/to the final gasket.

The gasket may have a solid structure, in which event the gasket will be unfoamed and the composition is preferably de-aerated before lining. However it is often preferred that the gasket, and also the gel, should have a cellular structure. This can be achieved by the inclusion of a blowing agent that will decompose on heating to cause foaming, but generally sufficient foaming follows from the heating driving air out of solution and may also be due in part to evaporation of water.

The composition preferably contains a slip aid so as to reduce the torque that is required to release a screw-on cap. Suitable lubricants are hydrocarbon wax, oxidised hydrocarbon wax, PTFE-coated polyethylene wax, silicone oil and oxidised polyethylene and blends of such materials with an oil. Suitable amounts of lubricant can be found by experiment and are generally in the range O.5 to 5 phr, although large amounts, for instance up to IO phr, can be used.

The composition may contain conventional additives such as antioxidants, bacteriocides, corrosion inhibitors, wetting agents, chelating agents, defoamers and pH adjusters.

If the total composition, including gellant, has only a relatively short shelf life, it should be prepared by blending the ingredients only shortly before lining.

The following are examples of the invention.

Example 1

The process is carried out on a lining machine in which the fluid composition can be lined to the inside of a lug cap 63mm in diameter using apparatus that is substantially the same as the apparatus for lining PVC plastisol and curing that.

The composition that is lined is neutralised by ammonia and is formed from:

| Ingredient | PHR (dry) |
|---|---|
| Natural rubber latex | 75 |
| Carboxylated styrene butadiene rubber | 25 |
| Filler | l20 |
| Titanium dioxide | lO |
| Emulsifier (oleic acid) | 7 |
| Paraffin wax | 2.5 |
| White oil | 2 |
| Antioxidant | 2 |
| Sulphur | l |
| Zinc dibutyl dithio carbamate | l |
| Zinc oxide | l |
| Viscosity modifier | l |
| Blowing agent | O.5 |

This composition is formed by mixing and, without being stored, is lined into the lug cap in conventional manner and the composition is substantially immediately passed through an oven at l6O°C for 2 minutes. It seems that as soon as the temperature of the composition starts to rise, it gels and loses its initial fluid state, and by the time the heating has been completed after about 2 minutes the gasket is firm, resilient and dry and adheres well to the cap. The final gasket has a thickness of about 2.5mm and a weight of about 2.Og.

Example 2

The process of Example 1 was repeated except that the blend of natural rubber and carboxylated SBR was replaced by a blend of 70 PHR natural rubber latex and 30 PHR styrene/butyle acrylate/acrylic acid copolymer latex. Satisfactory results were obtained.

Example 3

The process of Example 1 was repeated except that 100 PHR natural rubber latex was used instead of a blend of natural rubber latex and carboxylated SBR. The gasket appeared to have good properties but it adhered rather poorly to the cap and so was less satisfactory.

Example 4

The process of Example 1 was repeated except that the vulcanising system (sulphur and zinc dibutyl dithio carbamate) was omitted. The gasket dried well and adhered well, but had inferior resilience compared to the gasket of Example 1.

Example 5

The process of Example 1 was repeated except that the zinc oxide was omitted. The process gave a collapsed, hollow, product that was wholly unsuitable for use as a gasket.

Example 6

The process of Example 1 was repeated except that the zinc oxide, carboxylated SBR, sulphur and zinc dibutyl dithio carbamate were omitted. The process gave a badly adherent and blistered coating.

**Claims**

**1.** A process in which a gasket O.5 to 4mm thick is formed in a cap for a bottle or jar by lining into the cap a liquid gasketing composition and heating the cap at a temperature and for a time sufficient to solidify and cure the gasketing composition, and in this process the heating is conducted at a temperature of about l4O°C to about 22O°C for a period of about l/4 to about 10 minutes characterised in that the liquid gasketing composition is a filled, aqueous, rubber dispersion that adheres to the cap during and after the heating and that is fluid while being lined but that contains a gellant that causes the gasketing composition, before there is substantial evaporation of water during the heating, to gel in the form of a substantially uniform composition that substantially retains its adhesion to the cap and its uniformity during the heating.

2.  A process according to claim l in which the gasket is l to 4mm thick and the period is 1/4 to 5 minutes.

3.  A process according to claim l or claim 2 in which the heating is conducted at a temperature of about l5O to about l8O°C for a duration of about l to about 3 minutes.

4.  A process according to any preceding claim in which the rubber dispersion is a dispersion formed by blending rubber latex with filler and other additives.

5.  A process according to claim 4 in which the rubber latex comprises natural rubber latex.

6.  A process according to claim 4 or claim 5 in which the rubber latex comprises carboxylated rubber latex.

7.  A process according to claim 4 in which the rubber latex comprises a blend of above 50% by weight natural rubber with less than 50% by weight carboxylated styrene butadiene rubber.

8.  A process according to any preceding claim in which the composition includes a vulcanising agent and the rubber becomes vulcanised during the heating.

9.  A process according to any preceding claim in which the gellant comprises a material that is decomposed by the heating to liberate either an acid that reduces the pH of the composition to cause gelling or a polyvalent metal ion and the composition includes anionic emulsifier that reacts with the polyvalent metal ion to form gelling.

10.  A process according to claim 9 in which the gellant comprises a heat decomposable ammonium complex of zinc or magnesium and the composition includes an anionic soap or emulsifier that is precipitated by the zinc or magnesium after decomposition of the complex.

11.  A process according to any preceding claim in which the cap is a screw on cap and the composition includes a slip aid for reducing removal torque.

12.  A process according to any preceding claim in which the composition is foamed during the heating whereby a cellular gasket is formed.